# EUROPÄISCHE PATENTSCHRIFT

(11) **EP 2 405 261 B1**
(45) Veröffentlichungstag und Bekanntmachung des Hinweises auf die Patenterteilung: **18.03.2015**
(21) Anmeldenummer: 11171099.2
(22) Anmeldetag: 22.06.2011
(51) Int. Cl.: G01N 23/20

(54) **Verfahren zur Ermittlung der quantitativen Zusammensetzung einer Pulverprobe**
Method for determining the quantitative composition of a powder sample
Procédé de détermination de la composition quantitative d'un échantillon de poudre

(30) Priorität: 05.07.2010 DE 102010030939
(43) Veröffentlichungstag der Anmeldung: 11.01.2012
(73) Patentinhaber: Bruker AXS GmbH, 76187 Karlsruhe (DE)
(72) Erfinder:
(74) Vertreter: Kohler Schmid Möbus

(56) Entgegenhaltungen:
- CHRISTOPHER J. GILMORE ET AL: "High-throughput powder diffraction. I. A new approach to qualitative and quantitative powder diffraction pattern analysis using full pattern profiles", JOURNAL OF APPLIED CRYSTALLOGRAPHY, Bd. 37, Nr. 2, 17. März 2004 (2004-03-17), Seiten 231-242, XP55007092, ISSN: 0021-8898, DOI: 10.1107/S002188980400038X
- GORDON BARR ET AL: "PolySNAP3 : a computer program for analysing and visualizing high-throughput data from diffraction and spectroscopic sources", JOURNAL OF APPLIED CRYSTALLOGRAPHY, Bd. 42, Nr. 5, 8. August 2009 (2009-08-08) , Seiten 965-974, XP55007123, ISSN: 0021-8898, DOI: 10.1107/S0021889809025746
- WEI DONG ET AL: "A quick method for the quantitative analysis of mixtures. 1. powder X-ray diffraction", JOURNAL OF PHARMACEUTICAL SCIENCES, Bd. 97, Nr. 6, 1. Juni 2008 (2008-06-01), Seiten 2260-2276, XP55007146, ISSN: 0022-3549, DOI: 10.1002/jps.21142
- STEVE J. CHIPERA ET AL: "FULLPAT: a full-pattern quantitative analysis program for X-ray powder diffraction using measured and calculated patterns", JOURNAL OF APPLIED CRYSTALLOGRAPHY, Bd. 35, Nr. 6, 1. Januar 2002 (2002-01-01) , Seiten 744-749, XP55007091, ISSN: 0021-8898, DOI: 10.1107/S0021889802017405

## Beschreibung

### Hintergrund der Erfindung

Die Erfindung betrifft ein Verfahren zur automatischen Ermittlung der quantitativen Zusammensetzung einer Pulverprobe, die aus unterschiedlichen Phasenanteilen von kristallinen und/oder amorphen Phasen besteht, aus einem in einer diffraktometrisch von der Pulverprobe aufgenommenen Beugungsdiagramm oder energiedispersiven Spektrum mit folgenden Schritten:
(a) Vorgabe einer Liste von Phasen, die den Phasenanteilen in der Pulverprobe zugeordnet werden sollen;
(b) Berechnen eines theoretischen Beugungsdiagramms oder theoretischen energiedispersiven Spektrums basierend auf den in der Liste in Schritt (a) vorgegebenen Phasen;
(c) Anfitten des theoretischen Beugungsdiagramms oder theoretischen energiedispersiven Spektrums an das von der Pulverprobe aufgenommene mittels Variation der Phasenanteile des theoretischen Beugungsdiagramms oder theoretischen energiedispersiven Spektrums.

Ein solches Verfahren ist aus einem Artikel von Hill RJ, Howard CJ [1] bekannt.

Einen aktuellen Überblick über pulverdiffraktometrische Verfahren zur quantitativen Phasenanalyse geben I.C. Madsen und N. V. Y. Scarlett [2].

Röntgendiffraktometrie wird in vielfältiger Weise eingesetzt, um kristalline (und mit gewissen Einschränkungen auch amorphe) Bestandteile von Proben zu analysieren. Dabei wird Röntgenstrahlung an Kristallebenen in der Probe gebeugt. Aus der räumlichen Intensitätsverteilung der gebeugten Röntgenstrahlung, insbesondere der Lage von Intensitätsmaxima ("Reflexe") kann beispielsweise auf Netzebenenabstände und damit auf das Kristallgitter (Gittersymmetrie) oder auch auf bevorzugte Netzebenenorientierungen (Texturen) geschlossen werden. Den grundlegenden Zusammenhang zwischen Netzebenenabstand, Einfallswinkel und Wellenlänge von Röntgenstrahlung beschreibt das Bragg'sche Gesetz.

Bei röntgendiffraktometrische Messungen werden häufig zur Quantifizierung Verfahren basierend auf der Rietveld-Methode angewendet.

In der Rietveld-Methode wird ein theoretisch berechnetes RöntgenbeugungsDiagramm einer polykristallinen Substanz an ein gemessenes RöntgenbeugungsDiagramm mittels der mathematischen Methode der kleinsten Quadrate angepasst. Für die Berechnung speziell der Reflexintensitäten in dem RöntgenbeugungsDiagramm wird die Kristallstruktur, d.h. die räumliche Anordnung der Atome, aller vorhandenen Phasen benötigt.

A. Altomare et al. stellten 2001 ein Rietveld Programmpaket für die Analyse von polykristallinen Gemischen vor. Dieses Programmpaket wurde entwickelt, um Analysen nach der Rietveld-Methode automatisch durchführen zu können.

Barr et al. [4] stellten 2009 ein Programm zur Klassifikation von Pulver-Diffraktrometrie-Messungen vor, mit dem sich Cluster-Analysen durchführen lassen und auch große Datensätze visualisieren lassen.

Chipera et al. [5] stellten 2002 ein Programm vor, das ähnlich der Rietveld-Methode das gesamte Streumuster, inklusive Hintergrund, verwendet, aber explizit alle Phasen in einer Probe analysieren kann.

In neueren Verfahren basierend auf Anpassung von a) Einzelreflexen, b) der Pawley- oder c) der LeBail-Methode werden anstelle von berechneten Intensitäten gemessene Intensitäten verwendet, die z.B. aus der Vermessung einer Reinphase erhalten werden können (z.B. PONKCS Methode [3]). Dieses ermöglicht die Quantifizierung von Phasen, deren Kristallstruktur nur teilweise oder gar nicht bekannt sind (z.B. amorphe Phasen).

Alle bisher bekannten Verfahren zur quantitativen Analyse von Pulverproben erlauben jedoch nur die Quantifizierung von Phasen, die tatsächlich in der Probe vorhanden sind. Sind im Verfeinerungsmodell jedoch Phasen angegeben, die in der Probe tatsächlich nicht vorhanden sind, werden trotzdem Phasenanteile gefunden (häufig >> 1 %), entweder in Folge von Parameterkorrelationen (d.h. unzulässige Zuordnung von Intensitäten auf die nicht vorhandene Phase) oder durch zufällige Anpassung von Artefakten wie etwa Rauschen oder sonstige Profil-Misfits.

Somit ergibt sich das Problem, dass man vor der quantitativen Analyse die qualitative Zusammensetzung der Probe genau kennen muss.

Dies führt dann zu Problemen, wenn die Zusammensetzung der Probe schwankt, etwa bei Proben aus einem Steinbruch.

Die quantitative Analyse macht somit einen Vorscan erforderlich, wobei jedoch etwa durch Rauschen auch Phasen gefunden werden können, die in der Probe tatsächlich nicht vorhanden sind.

Gilmore et al. [6] stellten 2003 eine Methode vor, bei der in einem ersten qualitativen Schritt Korrelationsfaktoren berechnet werden, die aussagen, wie gut der Fit zwischen den puren Phasen und dem gemessenen Beugungsdiagramm ist. Phasen deren Korrelationsfaktoren unter einem Schwellwert liegen, können bei dieser Methode eliminiert werden. Phasenanteile können mit dieser Methode jedoch nicht zur Analyse verwendet werden.

### Aufgabe der Erfindung

Es ist daher Aufgabe der Erfindung, das automatische Ausschließen von amorphen oder kristallinen Phasen mit Phasenanteilen unterhalb eines benutzerdefinierbaren Schwellwertes in Profilanpassungsverfahren basierend auf Rietveld- oder Pawley-Methoden zu ermöglichen.

### Kurze Beschreibung der Erfindung

Diese Aufgabe wird erfindungsgemäß dadurch gelöst, dass in Schritt (a) eine Liste vorgegeben wird, die sich zusammensetzt aus tatsächlich in der Pulverprobe enthaltenen Phasen sowie auch aus möglicherweise nicht in der Pulverprobe enthaltenen Phasen, dass für jede Phase ein Schwellwert des Phasenanteils vorgegeben wird, und dass folgende weitere Schritte durchgeführt werden:
(d) Eliminieren aller Phasen, deren Phasenanteile unterhalb des Schwellwerts liegen, aus der Liste in Schritt (a);
(e) Wiederholen der Schritte (b), (c) und (d) mit der neuen Liste solange, bis alle Phasenanteile oberhalb ihrer vorgegebenen Schwellwerte liegen; und
(f) Ausgeben der Zusammensetzung der Pulverprobe mit den verbliebenen Phasen und den zugehörigen Phasenanteilen.

Diese Erfindung erlaubt es, mit verallgemeinerten Verfeinerungsmodellen zu arbeiten, die auch Phasen enthalten dürfen, die nicht in der Probe enthalten sind. Dieses ist von großem Vorteil im Bereich automatisierter Datenauswertung, da nun erstmals Proben mit variablem Phasenbestand ausgewertet werden können. Ein variabler Phasenbestand ist prinzipiell in jedem Anwendungsbereich möglich, speziell aber im den Bereichen Industrial Minerals und Minerals & Mining.

Der wesentliche Vorteil dieser Erfindung liegt in dem Umstand, dass eine parallele Phasenidentifizierung (qualitative Phasenanalyse) und quantitative Phasenanalyse erfolgt. So wäre es naheliegend, dass in einem vereinfachten Verfahren alle Phasen unterhalb eines Schwellwertes einfach ignoriert werden, und die Ergebnisse für die übrigen Phasen auf 100% hochskaliert werden. Der große Nachteil eines derartigen Verfahrens würde in unvermeidbaren Parameterkorellationen liegen, die zwangsläufig zur Berechnung ungenauer (bis grob falscher) Phasenanteile führen, wenn tatsächlich nicht vorhandene Phasen mitverfeinert werden. In dem erfindungsgemäßen Verfahren wird stattdessen die Profilanpassung nach einer Neubestimmung des Phasenbestandes wiederholt, so dass grundsätzlich genauere Ergebnisse erhalten werden.

Ein weiterer besonderer Vorteil dieser Erfindung ist ihre Eigenschaft eine vollautomatische Phasenindentifizierung durchzuführen. Da diese Phasenanalyse jeden gemessenen Datenpunkt berücksichtigt, sind die Ergebnisse besonders genau. Dieses steht im Gegensatz zu klassischen Verfahren, bei denen nur diskrete Peakpositionen verglichen werden. Da in den Profilanpassungsverfahren veränderte Peakpositionen (z.B. infolge von Mischkristallbildung oder präparationsbedingte Messfehler) angepasst werden, ist die Gefahr von Verwechslungen mit anderen Phasen (mit unterschiedlichem Chemismus aber ähnlichen Peakpositionen) deutlich verringert.

### Bevorzugte Ausführungsformen

Eine bevorzugte Ausführungsform der Erfindung ist dadurch gekennzeichnet, dass für jede Phase derselbe globale Schwellwert des Phasenanteils vorgegeben wird.

Alternativ wird für jede Phase ein individueller Schwellwert des Phasenanteils vorgegeben.

Bei einer Variante dieser Ausführungsform des erfindungsgemäßen Verfahrens wird der Schwellwert in Abhängigkeit vom Nachweislimit oder der Rauschschwelle des verwendeten Messverfahrens für jede Phase vorgegeben.

Es ist vorteilhaft, wenn bei dem erfindungsgemäßen Verfahren in Schritt (c) ein Profilanpassungsverfahren basierend auf einzelnen Reflexen angewandt wird. Dieses ist speziell für amorphe Phasen vorteilhaft.

Als Alternative wird bei dem erfindungsgemäßen Verfahren in Schritt (c) ein Profilanpassungsverfahren basierend auf der Rietveld-Methode angewandt.

Alternativ wird bei dem erfindungsgemäßen Verfahren in Schritt (c) ein Profilanpassungsverfahren basierend auf der Pawley-Methode angewandt. Dieses ist immer dann der Fall, wenn die Kristallstruktur der betreffenden Phase nicht bekannt ist, und daher die Rietveld-Methode nicht angewandt werden kann.

Eine weitere Alternative ist die Anwendung eines Profilanpassungsverfahrens basierend auf der LeBail-Methode in Schritt (c). Dieses ist immer dann vorteilhaft, wenn aufgrund starker Korrelationen zwischen Reflex- und Untergrundparametern der Einsatz der Pawley-Methode nachteilig ist

Es wird bevorzugt, wenn bei dem erfindungsgemäßen Verfahren das Beugungsdiagramm oder energiedispersive Spektrum mittels Röntgen-, Neutronen- oder Elektronen-Diffraktometrie aufgenommen wird.

Zu der Erfindung gehört auch die Verwendung des erfindungsgemäßen Verfahrens zur Qualitätskontrolle, insbesondere online.

Weitere Vorteile der Erfindung ergeben sich aus der Beschreibung und der Zeichnung. Ebenso können die vorstehend genannten und die weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Zeichnung und detaillierte Beschreibung der Erfindung

Es zeigt:

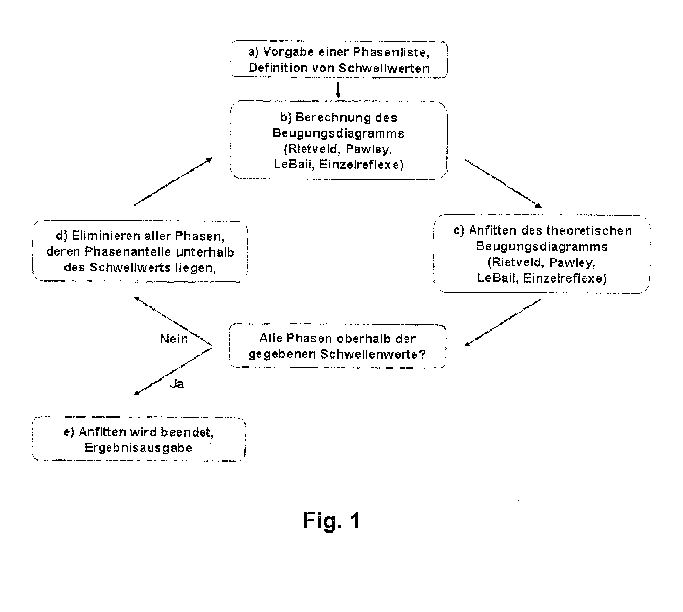

- Fig. 1: eine schematische Darstellung des Verfahrens.

Fig. 1 zeigt eine schematisch die Abfolge der Verfahrensschritte. Zunächst wird in Schritt a) eine Phasenliste vorgegeben, die diejenigen Phasen enthält, von denen man annimmt, dass sie in der Probe enthalten sein könnten. Desweiteren werden Schwellwerte von Phasenanteilen definiert, unterhalb derer die jeweiligen Phasen nicht berücksichtigt werden sollen.

In Schritt b) erfolgt dann die Berechnung des Beugungsdiagramms.
In Schritt c) wird das theoretische Beugungsdiagramm angefittet. Danach wird geprüft, ob alle Phasen bzw. Phasenanteile oberhalb des Schwellwertes liegen.

Sollte dies nicht der Fall sein, folgt Schritt d). Dabei werden alle Phasen eliminiert, deren Phasenanteile unterhalb des Schwellwertes liegen.

Mit der so modifizierten Phasenliste werden die Schritte b) und c) wiederholt.

Dieser Zyklus wird solange wiederholt, bis nur noch Phasen vorhanden sind, deren Phasenanteile oberhalb des Schwellwertes liegen. Ergibt die automatische Prüfung am Ende von Schritt c), dass dies der Fall ist, folgt Schritt e), die Ergebnisausgabe.

### Literatur

[1] Hill RJ, Howard CJ (1987) Quantitative phase analysis from neutron powder diffraction data using. Rietveld method. J Appl Cryst 20: 467-474
[2] I.C. Madsen, N. V. Y. Scarlett (2008): Quantitative Phase Analysis; Powder Diffraction: Theory and Practice, RSC Publishing, ISBN 978-0-85404-231-9, p. 298-331.
[3] Scarlett, N.V.Y. & Madsen, I.C. (2006). Quantification of phases with partial or no known crystal structure. Powder Diffraction, 21(4), 278-284.
[4] Gordon Barr et al., "PolySNAP3: a computer program for analysing and visualizing high-throughput data from diffraction and spectroscopic sources", Journal of Applied Crystallography, Bd. 42, Nr. 5, 8, 2009.
[5] Steve J. Chipera et al., "FULLPAT: a full-pattern quantitative analysis program for X-ray powder diffraction using measured and calculated patterns", Journal od Applied Crystallography, Bd. 35, Nr. 6, 1, 2002.
[6] Christopher J. Gilmore et al., "High-throughput powder diffraction. I. A new approach to qualitative and quantitative powder diffraction pattern analysis using full pattern profiles", Journal of Applied Crystallography, Bd. 37, Nr. 3, 17,2004.

## Patentansprüche

1. Verfahren zur automatischen Ermittlung der quantitativen Zusammensetzung einer Pulverprobe, die aus unterschiedlichen Phasenanteilen von kristallinen und/oder amorphen Phasen besteht, aus einem in einer diffraktometrisch von der Pulverprobe aufgenommenen Beugungsdiagramm oder energiedispersiven Spektrum mit folgenden Schritten:
(a) Vorgabe einer Liste von Phasen, die den Phasenanteilen in der Pulverprobe zugeordnet werden sollen;
(b) Berechnen eines theoretischen Beugungsdiagramms oder theoretischen energiedispersiven Spektrums basierend auf den in der Liste in Schritt (a) vorgegebenen Phasen;
(c) Anfitten des theoretischen Beugungsdiagramms oder theoretischen energiedispersiven Spektrums an das von der Pulverprobe aufgenommene mittels Variation der Phasenanteile des theoretischen Beugungsdiagramms oder theoretischen energiedispersiven Spektrums,
**dadurch gekennzeichnet,**
**dass** in Schritt (a) eine Liste vorgegeben wird, die sich zusammensetzt aus tatsächlich in der Pulverprobe enthaltenen Phasen sowie auch aus möglicherweise nicht in der Pulverprobe enthaltenen Phasen,
**dass** für jede Phase ein Schwellwert des Phasenanteils vorgegeben wird, und dass folgende weitere Schritte durchgeführt werden:
(d) Eliminieren aller Phasen, deren Phasenanteile unterhalb des Schwellwerts liegen, aus der Liste in Schritt (a);
(e) Wiederholen der Schritte (b), (c) und (d) mit der neuen Liste solange, bis alle Phasenanteile oberhalb ihrer vorgegebenen Schwellwerte liegen; und
(f) Ausgeben der Zusammensetzung der Pulverprobe mit den verbliebenen Phasen und den zugehörigen Phasenanteilen.

2. Verfahren nach Anspruch 1, **dadurch gekennzeichnet, dass** für jede Phase derselbe globale Schwellwert des Phasenanteils vorgegeben wird.

3. Verfahren nach Anspruch 1, **dadurch gekennzeichnet, dass** für jede Phase ein individueller Schwellwert des Phasenanteils vorgegeben wird.

4. Verfahren nach Anspruch 3, **dadurch gekennzeichnet, dass** der Schwellwert in Abhängigkeit vom Nachweislimit oder der Rauschschwelle des verwendeten Messverfahrens für jede Phase vorgegeben wird.

5. Verfahren nach einem der Ansprüche 1 bis 4, **dadurch gekennzeichnet, dass** in Schritt (c) ein Profilanpassungsverfahren basierend auf einzelnen Reflexen angewandt wird.

6. Verfahren nach einem der Ansprüche 1 bis 4, **dadurch gekennzeichnet, dass** in Schritt (c) ein Profilanpassungsverfahren basierend auf der Pawley-Methode angewandt wird.

7. Verfahren nach einem der Ansprüche 1 bis 4, **dadurch gekennzeichnet, dass** in Schritt (c) ein Profilanpassungsverfahren basierend auf der LeBail-Methode angewandt wird.

8. Verfahren nach einem der Ansprüche 1 bis 4, **dadurch gekennzeichnet, dass** in Schritt (c) ein Profilanpassungsverfahren basierend auf der Rietveld-Methode angewandt wird.

9. Verfahren nach einem der vorgehenden Ansprüche, **dadurch gekennzeichnet, dass** das Beugungsdiagramm oder energiedispersive Spektrum mittels Röntgen-, Neutronen- oder Elektronen-Diffraktometrie aufgenommen wird.

10. Verwendung eines Verfahrens nach einem der Ansprüche 1 bis 8 zur Qualitätskontrolle, insbesondere online.

## Claims

1. Method for automatic determination of a quantitative composition of a powder sample, having different phase contents of crystalline and/or amorphous phases, from a diffraction diagram recorded by diffractometry from the powder sample or from an energy-dispersive spectrum, the method comprising the steps of:
(a) predetermining a list of phases which are to be allocated to the phase contents in the powder sample;
(b) calculating a theoretical diffraction diagram or theoretical energy-dispersive spectrum based on the phases predetermined in the list of step (a);
(c) fitting the theoretical diffraction diagram or theoretical energy-dispersive spectrum to that of a recorded powder sample by variation of the phase contents of the theoretical diffraction diagram or theoretical energy-dispersive spectrum,
**characterized in that**
in step (a) a list is predetermined which comprises phases that are actually contained in the powder sample as well as phases that may not be contained in the powder sample,
a threshold phase content value is set for each phase,
and that the following further steps are carried out:
(d) eliminating all phases having phase contents which are below the threshold value from the list of step (a);
(e) repeating steps (b), (c) and (d) with the new list until all phase contents are above predetermined threshold values thereof; and
(f) outputting the composition of the powder sample with remaining phases and associated phase contents thereof.

2. Method according to claim 1, **characterized in that** the same global threshold phase content value is set for each phase.

3. Method according to claim 1, **characterized in that** individual threshold phase content values are set for each phase.

4. Method according to claim 3, **characterized in that** the threshold phase content values are predetermined for each phase in dependence on a proof limit or noise threshold of a measuring method that is used.

5. Method according to any one of the claims 1 to 4, **characterized in that** a profile adjustment method based on individual reflexes is used in step (c).

6. Method according to any one of the claims 1 to 4, **characterized in that** a profile adjustment method based on a Pawley method is used in step (c).

7. Method according to any one of the claims 1 to 4, **characterized in that** a profile adjustment method based on a LeBail method is used in step (c).

8. Method according to any one of the claims 1 to 4, **characterized in that** a profile adjustment method based on a Rietveld method is used in step (c).

9. Method according to any one of the preceding claims, **characterized in that** the diffraction diagram or energy-dispersive spectrum is recorded by means of X-ray, neutron or electron diffractometry.

10. Use of a method according to any one of the claims 1 to 8 for quality control, in particular for online quality control.

## Revendications

1. Procédé de détermination automatique de la composition quantitative d'un échantillon de poudre qui se compose de différentes fractions de phase de phases cristallines et/ou amorphes, à partir d'un diagramme de diffraction ou d'un spectre en dispersion d'énergie de l'échantillon de poudre obtenu par diffractométrie, comprenant les étapes suivantes :
(a) définition d'une liste de phases qui sont destinées à être associées aux fractions de phase dans l'échantillon de poudre ;
(b) calcul d'un diagramme de diffraction théorique ou d'un spectre en dispersion d'énergie théorique sur la base des phases définies dans la liste à l'étape (a) ;
(c) ajustement du diagramme de diffraction théorique ou du spectre en dispersion d'énergie théorique à celui obtenu de l'échantillon de poudre par variation des fractions de phase du diagramme de diffraction théorique ou du spectre en dispersion d'énergie théorique,
**caractérisé en ce**
**qu'**à l'étape (a) est définie une liste qui se compose de phases effectivement contenues dans l'échantillon de poudre ainsi que de phases possiblement non contenues dans l'échantillon de poudre,
**qu'**une valeur seuil de la fraction de phase est définie pour chaque phase,
et **que** les étapes supplémentaires suivantes sont exécutées :
(d) élimination de la liste obtenue à l'étape (a) de toutes les phases dont les fractions de phase sont inférieures à la valeur seuil ;
(e) répétition des étapes (b), (c) et (d) avec la nouvelle liste jusqu'à ce que toutes les fractions de phase soient supérieures à leurs valeurs seuils définies ; et
(f) sortie de la composition de l'échantillon de poudre avec les phases restantes et les fractions de phase correspondantes.

2. Procédé selon la revendication 1, **caractérisé en ce que** la même valeur seuil globale de la fraction de phase est définie pour chaque phase.

3. Procédé selon la revendication 1, **caractérisé en ce qu'**une valeur seuil individuelle de la fraction de phase est définie pour chaque phase.

4. Procédé selon la revendication 3, **caractérisé en ce que** la valeur seuil est définie pour chaque phase en fonction de la limite de détection ou du seuil de bruit du procédé de mesure utilisé.

5. Procédé selon l'une des revendications 1 à 4, **caractérisé en ce qu'**à l'étape (c) on utilise un procédé d'adaptation de profil basé sur des réflexions individuelles.

6. Procédé selon l'une des revendications 1 à 4, **caractérisé en ce qu'**à l'étape (c) on utilise un procédé d'adaptation de profil basé sur la méthode de Pawley.

7. Procédé selon l'une des revendications 1 à 4, **caractérisé en ce qu'**à l'étape (c) on utilise un procédé d'adaptation de profil basé sur la méthode de LeBail.

8. Procédé selon l'une des revendications 1 à 4, **caractérisé en ce qu'**à l'étape (c) on utilise un procédé d'adaptation de profil basé sur la méthode de Rietveld.

9. Procédé selon l'une des revendications précédentes, **caractérisé en ce que** le diagramme de diffraction ou le spectre en dispersion d'énergie est obtenu par diffractométrie de rayons X, de neutrons ou d'électrons.

10. Utilisation d'un procédé selon l'une des revendications 1 à 8 pour le contrôle de qualité, en particulier en ligne.
